# EUROPEAN PATENT SPECIFICATION

(11) **EP 0 971 861 B1**
(45) Date of publication and mention of the grant of the patent: **07.04.2004**
(21) Application number: 98904718.8
(22) Date of filing: 27.01.1998
(51) Int. Cl.: C03C 3/068

(54) **GLASSES WITH VERY HIGH REFRACTIVE INDEX**
GLÄSER MIT SEHR HOHEM BRECHUNGSINDEX
VERRES AVEC INDICE DE REFRACTION TRES ELEVE

(30) Priority: 29.01.1997 FR 9700950; 10.03.1997 US 39944 P
(43) Date of publication of application: 19.01.2000
(73) Proprietor: Corning S.A., 77210 Avon (FR)
(72) Inventor: COMTE, Marie, J., M., F-92260 Fontenay aux Roses (FR)
(74) Representative: Colas, Jean-Pierre
(86) International application number: PCT/US1998/001589
(87) International publication number: WO 1998/032706

(56) References cited:
- EP-A- 0 570 687
- DE-A- 3 201 344
- DE-A- 3 201 346
- DE-A- 4 242 859
- US-A- 4 612 295
- US-A- 4 732 876
- US-A- 5 288 669
- PATENT ABSTRACTS OF JAPAN vol. 015, no. 112 (C-0815), 18 March 1991 (1991-03-18) & JP 03 005340 A (HOYA CORP), 11 January 1991 (1991-01-11)
- PATENT ABSTRACTS OF JAPAN vol. 010, no. 090 (C-337), 8 April 1986 (1986-04-08) & JP 60 221338 A (OBARA KOUGAKU GLASS SEIZOUSHIYO:KK), 6 November 1985 (1985-11-06)
- DATABASE WPI Section Ch, Week 8637 Derwent Publications Ltd., London, GB; Class L01, AN 86-240949 XP002042499 & JP 61 168551 A (NIPPON KOGAKU KK), 30 July 1986 (1986-07-30)

## Description

The present invention relates to glasses having a refractive index of more than 1.880, an Abbe number of more than or equal to 30.4, and a density of less than 4.1.

Such glasses are of great interest for ophthalmic applications, particularly in the case of large corrective-vision levels: the high refractive index allows limiting the thickness of the glasses. The moderate density and the relatively high Abbe number also contribute to the comfort of the wearer.

Moreover, it is advantageous to have glasses that are easy to manufacture and that have a low manufacturing cost. For that purpose, a low cost of raw materials and a low tendency toward devitrification are desired elements.

### Prior Art

Glasses presenting optical properties and a similar density to those described above are already known, but they are not satisfactory insofar as the cost of manufacture and the resistance to devitrification is concerned.

Thus, European Patent No. B-570,687 describes glasses having the following composition, expressed in wt% based on the oxides:

| | |
|---|---|
| SiO₂ | 5-8 |
| B₂O₃ | 15-21 |
| ZrO₂ | 3-10 |
| TiO₂ | 7-17 |
| Nb₂O₅ | 20.5-26 |
| with ZrO₂+ TiO₂+ Nb₂O₅ | 29-45 |
| La₂O₃ | 19-32 |
| Y₂O₃ | 0-9 |
| CaO | 8-16 |
| SrO | 0-5 |
| BaO | 0-5 |
| MgO | 0-5 |
| with CaO + SrO + BaO + MgO | 8-16 |
| ZnO | 0-5 |
| Li₂O | 0-2 |
| Na₂O | 0-2 |
| K₂O | 0-2 |
| with Li₂O + Na₂O + K₂O | 0-2 |

These glasses have a refractive index of more than 1.88, an Abbe number of more than 29, a density of less than 4.1, and an integrated transmission from 380 to 800 nm of more than 79% (under a thickness of 10 mm).

However, they present two disadvantages:
- A very high tendency toward devitrification associated with a very low liquidus viscosity. The liquidus temperature is on the order of 1150° C; at this temperature, the viscosity is only a few poise.
- A high content of Nb₂O₅ (20.5-26), which makes the cost of the raw materials very high.

Other glasses whose composition presents a certain analogy with that of the glasses of the invention are known.

Thus Japanese Patent No. A-3-5340 (1991) describes glasses having a refractive index of 1.83-1.88, whose proportion is, in wt%:

| | |
|---|---|
| SiO₂ | 2-14 |
| B₂O₃ | 8-25 |
| with SiO₂ + B₂O₃ | 22-29 |
| CaO | 13-25 |
| MgO | 0-10 |
| with CaO + MgO | 13-25 |
| La₂O₃ | 15-28 |
| BaO + SrO + ZnO | 0-12 |
| with La₂O₃ + BaO + SrO + ZnO | 15-28 |
| ZrO₂ | 1-9 |
| TiO₂ | 6-15 |
| Nb₂O₅ | 6-20 |
| with ZrO₂ + TiO₂ + Nb₂O₅ | 24-38 |
| K₂O + Na₂O + Li₂O | 0-3 |

Although this document mentions glasses that can have a refractive index of at most 1.88, the highest refractive index of the glasses described in the example reaches only 1.8725, with most of the glasses specifically described having much lower indices. Moreover, the CaO content of these prior glasses is much higher than that of the glasses of the invention.

German Patent No. C-4,242,859 claims glasses with a high refractive index whose composition, defined very broadly, is close to the composition of the glasses of the invention, from which it differs notably by a lower ZrO₂ (<8%) content and by the obligatory presence of fluorine. The five specific examples described differ from the glasses of the invention in other compositional differences affecting one or more constituents.

### Definition of the Invention

The invention concerns glasses having a refractive index of more than 1.880, an Abbe number of more than or equal to 30.4 and a density of less than 4.1, having the following chemical composition expressed in wt% based on the oxides:

| | |
|---|---|
| SiO₂ | 6-9 |
| B₂O₃ | 15-19 |
| with SiO₂ + B₂O₃ | <26 |
| Nb₂O₅ | 12 to <20.5 |
| ZrO₂ | 8-10 |
| TiO₂ | 7-11 |
| La₂O₃ | 23-32 |
| with ZrO₂ + TiO₂ + La₂O₃ | ≥44 |
| Y₂O₃ | 0-5 |
| WO₃ | 0-5 |
| CaO | 8-<13 |
| SrO | 0-2 |
| BaO | 0-2 |
| MgO | 0-2 |
| ZnO | 0-5 |
| with CaO + SrO + BaO + MgO + ZnO | ≥9 |
| Li₂O + Na₂O + K₂O | 0-2 |
| Others | 0-1 |

Preferred glasses are those having the following chemical composition expressed in wt% based on the oxides:

| | |
|---|---|
| SiO₂ | 6.5-8 |
| B₂O₃ | 15.5-19 |
| with SiO₂ + B₂O₃ | <26 |
| Nb₂O₅ | 15-18.5 |
| ZrO₂ | ≥8 to 9 |
| TiO₂ | 9-11 |
| La₂O₃ | 25-30 |
| with ZrO₂ + TiO₂ + La₂O₃ | ≥44 |
| CaO | 11 to <13 |
| ZnO | 0-5 |
| with CaO + ZnO | ≥12 |
| Others | 0-1 |

Even more preferred glasses are those having the following chemical composition expressed in wt% based on the oxides:

| | |
|---|---|
| SiO₂ | 6.5-8 |
| B₂O₃ | 15.5-19 |
| with SiO₂ + B₂O₃ | <26 |
| Nb₂O₅ | 15-18.5 |
| ZrO₂ | ≥8 to 9 |
| TiO₂ | 9-10.5 |
| La₂O₃ | 25 to <28 |
| with ZrO₂ + TiO₂ + La₂O₃ | ≥44 |
| CaO | 12-<13 |
| Others | 0-1 |

The reduced content of Nb₂O₅ of these glasses, compared to that of those described in European Patent No. B-570,687, allows a significant reduction in the cost of the raw materials.

The glasses of the invention also have an Abbe number at a much higher level than those of European Patent No. B-570,687. In fact, Abbe numbers in the 30.4-31.3 range have been obtained, whereas those for the glasses of the examples of European Patent No B-570,687 are of 29.6-30.6. The decrease in the tendency toward devitrification observed for the glasses of the invention is connected with the fact that the principal crystalline phase that undergoes devitrification in the glasses from European Patent No. B-570,687 is a complex oxide with a high niobium content. The decrease in the content of this element allows the decrease in the tendency toward devitrification, with the number of crystals and the rate of their growth being significantly reduced. The most preferred compositions also present a lower liquidus temperature.

A refractive index of more than 1.88 cannot be obtained if the content of Nb₂O₅ is less than 12%.

For the same reason, the contents of ZrO₂, TiO₂, and La₂O₃ must be at least 8, 7, and 23%, respectively, and the total of the contents of these three elements must be at least 44%.

A ZrO₂ content of more than 10% leads to excessive devitrification.

A La₂O₃ content of more than 32% leads to an excessively high density

The color of the glass is very sensitive to the TiO₂ content; for this reason, this element is limited to 11%.

Although they are less effective than the above-described elements, the oxides of alkaline earth metals and ZnO contribute to the obtention of a high index. They present the advantage of having a small influence on the dispersion. The oxides of alkaline earth metals limit the risk of devitrification of zirconium-rich phases. CaO is preferred among these oxides because it increases the density less than BaO or ZnO. It has also been observed that it was more interesting than MgO in regard to the devitrification. Its level must be between 8 and 13%.

SiO₂ and B₂O₃ are necessary as glass formation agents. Lower levels than 6 and 15%, respectively, lead to an unacceptable devitrification, whereas a total content of these oxides of more than 26% does not allow the obtention of the desired index.

It is possible to add small quantities of oxides of alkali metals, for example, to facilitate the melting. However, their total content must be limited to 2%, because these elements decrease the viscosity of the glass and, in particular, the liquidus viscosity. Preferably, they are absent from the composition.

It is also possible to add the usual refiners, such as As₂O₃, Sb₂O₅, fluorides, bromides, or chlorides, provided that their total content does not exceed 1%.

If fairly pure raw materials are used, for example, those contributing an Fe₂O₃ content of less than 10 ppm, the glass is only weakly colored. If desired, discoloration agents can be added. It is also possible to color the glass by adding the usual dyeing elements, for example, oxides of transition metals or rare earth metals.

The glasses described in the preferred domains ranges are optimized in terms of devitrification and density.

The invention is illustrated by the nonlimiting examples given in Table I.

All the proportions are expressed in wt%. Although these examples are only laboratory experiments, the glasses of the invention can be manufactured industrially using the classic methods of melting and forming.

In each case, 3000 g of raw materials are melted over 1 h at 1300°C in a platinum crucible. The glass is then formed in the form of bars having a thickness of 1 cm. The annealing is carried out at 60°C/h.

The color of the glass was determined by measuring the integrated transmission, between 380 and 800 nm, of polished samples having a thickness of 10 mm.

The tendency toward devitrification was evaluated using the following test: for each composition, small pieces of glass placed in platinum crucibles were retreated for 5 min at 1096, 1112, and 1125°C, respectively. The crystallization levels observed visually were compared and a ranking between 1 and 4 was attributed to each glass: 4 for the glasses having the highest tendency to devitrification, and 1 for the glasses possessing the lowest tendency toward devitrification.

Example 1 belongs to the most preferred domain. Examples 2, 3 and 4 belong to the preferred domain. Example 8 is not within the scope of the invention: its Nb₂O₅ content is too high and it has an unacceptable tendency toward devitrification.

**Table I**

| | 1 | 2 | 3 | 4 | 5 | 6 | 7 | 8 |
|---|---|---|---|---|---|---|---|---|
| SiO₂ | 7.3 | 7.3 | 7.3 | 7.3 | 7.3 | 7.3 | 7.3 | +7.3 |
| B₂O₃ | 16.85 | 16.65 | 16.65 | 17.15 | 16.65 | 17.65 | 18.15 | 16.65 |
| CaO | 12.5 | 12.5 | 12.5 | 12 | 12 | 10.5 | 9 | 14 |
| ZnO | | | | | | | 2.5 | |
| TiO₂ | 9.6 | 10.1 | 9.6 | 9.6 | 8.6 | 9.6 | 9.6 | 8.6 |
| ZrO₂ | 8.2 | 8.2 | 8.5 | 8.7 | 8.2 | 8.2 | 8.2 | 8.2 |
| Nb₂O₅ | 18 | 15.95 | 16.9 | 17.7 | 18.2 | 17.7 | 17.7 | 21.2 |
| La₂O₃ | 27.5 | 29.25 | 28.5 | 27.5 | 29 | 29 | 27.5 | 24 |
| As₂O₃ | 0.05 | 0.05 | 0.05 | 0.05 | 0.05 | 0.05 | 0.05 | 0.05 |
| SiO₂+B₂O₃ | 24.15 | 23.95 | 23.95 | 24.45 | 23.95 | 24.95 | 25.45 | 23.95 |
| TiO₂+ZrO₂+ La₂O₃ | 45.3 | 47.55 | 46.6 | 45.8 | 45.8 | 46.8 | 45.3 | 40.8 |
| CaO+ZnO | 12.5 | 12.5 | 12.5 | 12 | 12 | 10.5 | 11.5 | 14 |
| Refractive Index | 1.884 | 1.885 | 1.885 | 1.884 | 1.883 | 1.884 | 1.883 | 1.883 |
| Abbe No. | 30.8 | 31.3 | 31.3 | 31 | 31.3 | 30.8 | 30.5 | 30.4 |
| Density | 4.03 | 4.06 | 4.05 | 4.03 | 4.07 | 4.05 | 4.05 | 3.98 |
| Transmission | 80.8 | 80.8 | 81.1 | 81.4 | 81.1 | 80.5 | 81.4 | 80.6 |
| Tendency Toward Devitrification | 2 | 1 | 2 | 2 | 2 | 3 | 1 | 4 |
| Liquidus (°C) | 1122-1140 | 1123-1139 | 1143-1162 | 1143-1162 | 1130-1139 | 1152-1161 | 1139-1164 | 1149-1161 |

## Claims

1. Glasses possessing a refractive index of more than 1.880, an Abbe number of more than or equal to 30.4, and a density of less than 4.1, and having the following chemical composition, expressed in wt% based on the oxides:
| | |
|---|---|
| SiO₂ | 6-9 |
| B₂O₃ | 15-19 |
| with SiO₂ + B₂O₃ | <26 |
| Nb₂O₅ | 12 to <20.5 |
| ZrO₂ | 8-10 |
| TiO₂ | 7-11 |
| La₂O₃ | 23-32 |
| with ZrO₂ + TiO₂ + La₂O₃ | ≥44 |
| Y₂O₃ | 0-5 |
| WO₃ | 0-5 |
| CaO | 8 to <13 |
| SrO | 0-2 |
| BaO | 0-2 |
| MgO | 0-2 |
| ZnO | 0-5 |
| with CaO + SrO + BaO + MgO + ZnO | ≥ 9 |
| Li₂O+Na₂O+K₂O | 0-2 |
| Others | 0-1 |

2. Glasses according to Claim 1, **characterized in that** they have the following chemical composition expressed in wt% based on the oxides:
| | |
|---|---|
| SiO₂ | 6.5-8 |
| B₂O₃ | 15.5-19 |
| with SiO₂ + B₂O₃ | <26 |
| Nb₂O₅ | 15-18.5 |
| ZrO₂ | ≥8-9 |
| TiO₂ | 9-11 |
| La₂O₃ | 25-30 |
| with ZrO₂ + TiO₂ + La₂O₃ | ≥44 |
| CaO | 11 to < 13 |
| ZnO | 0-5 |
| with CaO + ZnO | ≥12 |
| Others | 0-1 |

3. Glasses according to Claim 2, **characterized in that** they have the following chemical composition expressed in wt% based on the oxides:
| | |
|---|---|
| SiO₂ | 6.5-8 |
| B₂O₃ | 15.5-19 |
| with SiO₂ + B₂O₃ | <26 |
| Nb₂O₅ | 15-18.5 |
| ZrO₂ | ≥8-9 |
| TiO₂ | 9-10.5 |
| La₂O₃ | 25-28 |
| with ZrO₂ + TiO₂ + La₂O₃ | ≥44 |
| CaO | 12 to <13 |
| Others | 0-1 |

## Revendications

1. Verres possédant un indice de réfraction supérieur à 1,880, un nombre d'Abbé supérieur ou égal à 30,4, et une densité inférieure à 4,1, et ayant la composition chimique suivante, exprimée en % en poids sur la base des oxydes :
| | |
|---|---|
| SiO₂ | 6-9 |
| B₂O₃ | 15-19 |
| avec SiO₂ + B₂O₃ | <26 |
| Nb₂O₅ | 12 à <20,5 |
| ZrO₂ | 8-10 |
| TiO₂ | 7-11 |
| La₂O₃ | 23-32 |
| avec ZrO₂ + TiO₂ + La₂O₃ | ≥44 |
| Y₂O₃ | 0-5 |
| WO₃ | 0-5 |
| CaO | 8 à <13 |
| SrO | 0-2 |
| BaO | 0-2 |
| MgO | 0-2 |
| ZnO | 0-5 |
| avec CaO + SrO + BaO + MgO + ZnO | ≥9 |
| Li₂O + Na₂O + K₂O | 0-2 |
| Autres | 0-1 |

2. Verres selon la revendication 1, **caractérisés en ce qu'**ils ont la composition chimique suivante exprimée en % en poids sur la base des oxydes :
| | |
|---|---|
| SiO₂ | 6,5-8 |
| B₂O₃ | 15,5-19 |
| avec SiO₂ + B₂O₃ | <26 |
| Nb₂O₅ | 15-18,5 |
| ZrO₂ | ≥8-9 |
| TiO₂ | 9-1 |
| La₂O₃ | 25-30 |
| avec ZrO₂ + TiO₂ + La₂O₃ | ≥44 |
| CaO | 11 à <13 |
| ZnO | 0-5 |
| avec CaO + ZnO | ≥12 |
| Autres | 0-1 |

3. Verres selon la revendication 2, **caractérisés en ce qu'**ils ont la composition chimique suivante exprimée en % en poids sur la base des oxydes :
| | |
|---|---|
| SiO₂ | 6,5-8 |
| B₂O₃ | 15,5-19 |
| avec SiO₂ + B₂O₃ | <26 |
| Nb₂O₅ | 15-18,5 |
| ZrO₂ | ≥8-9 |
| TiO₂ | 9-10,5 |
| La₂O₃ | 25-<28 |
| avec ZrO₂ + TiO₂ + La₂O₃ | ≥44 |
| CaO | 12 à <13 |
| Autres | 0-1 |

## Patentansprüche

1. Gläser, die einen Brechungsindex von mehr als 1,880, eine Abbe-Zahl von mehr als oder gleich 30,4 und eine Dichte von weniger als 4,1 besitzen und die die folgende chemische Zusammensetzung haben, ausgedrückt in Gew.-%, bezogen auf die Oxide:
| | |
|---|---|
| SiO₂ | 6-9 |
| B₂O₃ | 15-19 |
| wobei SiO₂ + B₂O₃ | < 26 |
| Nb₂O₅ | 12 bis < 20,5 |
| ZrO₂ | 8-10 |
| TiO₂ | 7-11 |
| La₂O₃ | 23-32 |
| wobei ZrO₂ + TiO₂ + La₂O₃ | ≥ 44 |
| Y₂O₃ | 0-5 |
| WO₃ | 0-5 |
| CaO | 8 bis < 13 |
| SrO | 0-2 |
| BaO | 0-2 |
| MgO | 0-2 |
| ZnO | 0-5 |
| wobei CaO + SrO + BaO + MgO + ZnO | ≥ 9 |
| Li₂O + Na₂O + K₂O | 0-2 |
| andere | 0-1. |

2. Gläser gemäß Anspruch 1, **dadurch gekennzeichnet, dass** sie die folgende chemische Zusammensetzung haben, ausgedrückt in Gew.-%, bezogen auf die Oxide:
| | |
|---|---|
| SiO₂ | 6,5-8 |
| B₂O₃ | 15,5-19 |
| wobei SiO₂ + B₂O₃ | < 26 |
| Nb₂O₅ | 15 bis 18,5 |
| ZrO₂ | ≥ 8-9 |
| TiO₂ | 9-11 |
| La₂O₃ | 25-30 |
| wobei ZrO₂ + TiO₂ + La₂O₃ | ≥ 44 |
| CaO | 11 bis < 13 |
| ZnO | 0-5 |
| wobei CaO + ZnO | ≥ 12 |
| andere | 0-1. |

3. Gläser gemäß Anspruch 2, **dadurch gekennzeichnet, dass** sie die folgende chemische Zusammensetzung haben, ausgedrückt in Gew.-%, bezogen auf die Oxide:
| | |
|---|---|
| SiO₂ | 6,5-8 |
| B₂O₃ | 15,5-19 |
| wobei SiO₂ + B₂O₃ | < 26 |
| Nb₂O₅ | 15 bis 18,5 |
| ZrO₂ | ≥ 8-9 |
| TiO₂ | 9-10,5 |
| La₂O₃ | 25 bis < 28 |
| wobei ZrO₂ + TiO₂ + La₂O₃ | ≥ 44 |
| CaO | 12 bis < 13 |
| andere | 0-1. |
